# EUROPEAN PATENT SPECIFICATION

(11) **EP 3 498 091 B1**
(45) Date of publication and mention of the grant of the patent: **16.09.2020**
(21) Application number: 17800559.1
(22) Date of filing: 21.09.2017
(51) Int. Cl.: A01K 31/16

(54) **EGG COLLECTION DEVICE IN LAYING BATTERY**
EIERSAMMELVORRICHTUNG IN LEGEBATTERIE
DISPOSITIF DE RAMASSAGE D'OEUFS DANS UNE BATTERIE D'ÉLEVAGE

(30) Priority: 30.09.2016 ES 201631183 U
(43) Date of publication of application: 19.06.2019
(73) Proprietor: Zucami Poultry Equipment, S.L.U., 31191 Beriain Navarra (ES)
(72) Inventor: CERVERA SOTO, Pedro, 31191 Beriain Navarra (ES)
(74) Representative: Buceta Facorro, Luis
(86) International application number: PCT/ES2017/070624
(87) International publication number: WO 2018/060535

(56) References cited:
- CH-A- 371 919
- DE-A1- 3 326 706

## Description

### OBJECT OF THE INVENTION

The present invention relates to the technical field of housings for hens, more specifically to the fields of nesting boxes for poultry and egg collection, and in particular it refers to a device for collecting eggs in aviaries, which allows optimization of the space available for the poultry, as well as maintenance of optimal hygienic conditions.

### BACKGROUND OF THE INVENTION

In the field of poultry farms, specifically in intensive egg production, currently existing facilities can be classified into two main groups. The first group consists of what is known as cages, or battery cages, in which the hens remain inside a cage and lay eggs in the same, these eggs then being collected and transferred outside the cage, usually in an automated manner.

With the current regulations on the welfare of farm animals aiming to achieve better conditions for said animals, nowadays, the most common facilities in new farms are known as ecological systems or aviaries, wherein hens have freedom of movement inside a shed with appropriate dimensions depending on the number of hens being housed therein. On occasions, based on the assigned degree of freedom, the sheds may have exits to allow the passage of hens to the surrounding terrain.

Defined in the aviaries is an area known as the nest or nesting box, intended to house the hens when they are laying eggs. The eggs are subsequently collected, generally in an automated manner, whereby said nesting boxes are provided with different systems for collecting the eggs and transferring them to the exterior.

The nesting boxes usually comprise a compartment, isolated from the outside, protected, and with the necessary conditions of light, temperature and comfort for the hen to lay eggs. The floor of said compartment is slightly inclined so that the egg rolls outside the nesting box and lands on a conveyor belt that moves it to an external area for selection and classification. The conveyer belt is generally covered to prevent the hens from accessing the eggs, as well as for maintaining adequate hygienic conditions.

The nesting box is usually defined by an entrance, a laying area and a collection area. The entrance to the nest is usually delimited by a curtain, and the laying area, which is the area in which the hen lays the eggs, comprises an inclined floor which allows the deposited egg to slide and roll out from said area into the collection area, which is where the eggs accumulate and they are collected, generally in an automatic way, by means of a conveyor belt.

This egg collection area can be located both at the front or at the rear of the nest, and the floor is inclined in one direction or the other depending on said location, so that the egg rolls gently to the collection area due to gravity. An additional separation curtain prevents the hen from seeing the eggs accumulated in the collection area and from pecking at them and damaging them.

Document CH371919 A discloses a laying nest for chickens, including a sloped laying bug from which the laid eggs roll into a collecting bin. Behind the laying board a catching pan is arranged on one arm of a seesaw, which catching pan is arranged by the rolling egg that lowers to a collection drawer, which rolls the egg while the empty drip tray rises back into the catchment area.

Patent document number DE3326706 A1 discloses an egg transporting device on which, in order to prevent damage to eggs arising from the difference in height between a laying path and a transport path, a two-armed bent lever is arranged so as to be pivotable between them, the upper arm of which comes to rest against the end of the laying path, while the lower arm comes to rest against the transport path in the state of rest. An egg arriving onto the laying path on the one hand opens a discharge region between the upper lever arm and the laying path, while at the same time the lower lever arm pivots upwards and reduces the difference in height in such a way that when the egg passes through the discharging aperture, it can be taken up by the lower lever arm with virtually no drop at all. The lever then pivots back to the transport path, braked by means of a brake.

### DESCRIPTION OF THE INVENTION

The object of the invention consists of a device for collecting eggs in aviaries which replaces the current egg collection areas of nesting boxes, allowing the definition of a collection channel, which runs below the floor of the laying area, towards the outside, in order to transfer the eggs to a selection area. The invention is defined by claim 1.

To this end, the device comprises an oscillating scoop located at the lower end of the inclined floor of the nesting box and a channel that runs below said inclined floor, such that the scoop collects the eggs sliding down said inclined floor in an orderly manner, transferring them to a lower plane and depositing them at one end of said channel, through which they are transferred until they are removed from the aviary, preferably to a selection area.

One of the main advantages of this device consists in optimizing the space available for the hens in the aviaries. Thus, in traditional systems with a channel for eggs, usually defined in front or behind the aviary, sometimes the surface occupied by said egg channel cannot be used by the hens. However, an egg channel defined below the floor of the aviary minimizes the unused space, thereby being able to house a greater number of hens in the same facility, or increasing the available space for each hen.

Furthermore, this device improves both accessibility and maintenance of optimal hygienic conditions in the egg transport channel. In aviaries with the egg channel defined behind the nesting box, it is impossible to access the same from the front, because the nest itself hinders access. Similarly, in aviaries with the egg channel in the front, the channel cannot be accessed from the rear.

On the other hand, with the egg channel defined in the lower part of the floor of the nesting box, access to the same is ensured from both sides by simply lifting the floor of the laying area, so that it can be used in any position, regardless of the access conditions of the facility for which it is intended.

### DESCRIPTION OF THE DRAWINGS

As a complement to the description provided herein and for the purpose of helping to make the characteristics of the invention more readily understandable, in accordance with a preferred practical embodiment thereof, said description is accompanied by a set of drawings constituting an integral part of the same, which by way of illustration and not limitation represent the following:
Figure 1 shows a front view of a transverse cross section of the nest of an aviary provided with the device for collecting eggs, wherein the main constituent elements thereof can be seen.
Figure 2 shows a detailed view of the scoop.
Figure 3 shows a front view of a first stage of collecting an egg with the device.
Figure 4 shows a front view of a second stage of collecting an egg with the device.
Figure 5 shows a front view of a third stage of collecting an egg with the device
Figure 6 shows a front view of a fourth stage of collecting an egg with the device.

### PREFERRED EMBODIMENT OF THE INVENTION

What follows is a detailed description, with the help of the figures referenced above, of an exemplary preferred embodiment of the object of the present invention.

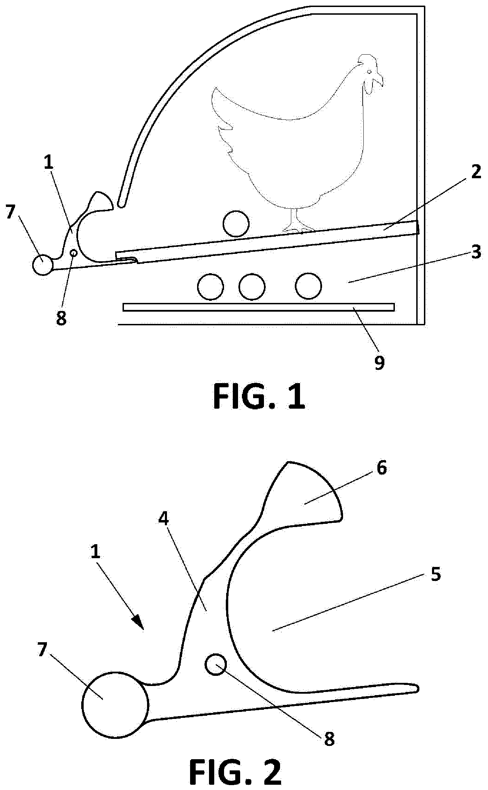

The device for collecting eggs in aviaries described herein, shown in Figure 1, is made up of an oscillating scoop (1), which transfers the eggs deposited by a hen inside the nesting box of an aviary, which slide down an inclined floor (2) of said nesting box due to gravity until they fall inside the scoop (1), towards a channel (3), which runs below the inclined floor (2) in a direction perpendicular to the nesting box in order to transfer said eggs to the exterior of the aviary, where they are collected by means of a conveyor belt, not shown in the attached figures, for selection and packaging thereof.

The scoop (1), which in this preferred embodiment is made of a molded plastic piece, is intended to be arranged at the lower end of the inclined floor (2) to thus collect the eggs that slide down due to gravity. As shown in detail in Figure 2, it in turn comprises a body (4), at one of end of which a housing (5) is defined, intended to collect, like a tray, the egg that slides down the inclined floor (2), a protrusion (6) defined at a location above the housing (5), and a counterweight (7) located at one end of the body (4), opposite the end at which the housing (5) is defined. The body (4) of the scoop (1) oscillates with respect to a fixed shaft (8) running transverse to said body (4) between a first position and a second position, depending on both the weight of an egg housed in the housing (5) and the weight of the counterweight (7).

As shown in Figure 1, the channel (3) runs transversely and perpendicularly to the inclined floor (2), and is limited at the top by an inner face of the inclined floor (2) and at the bottom by a horizontal plane (9).

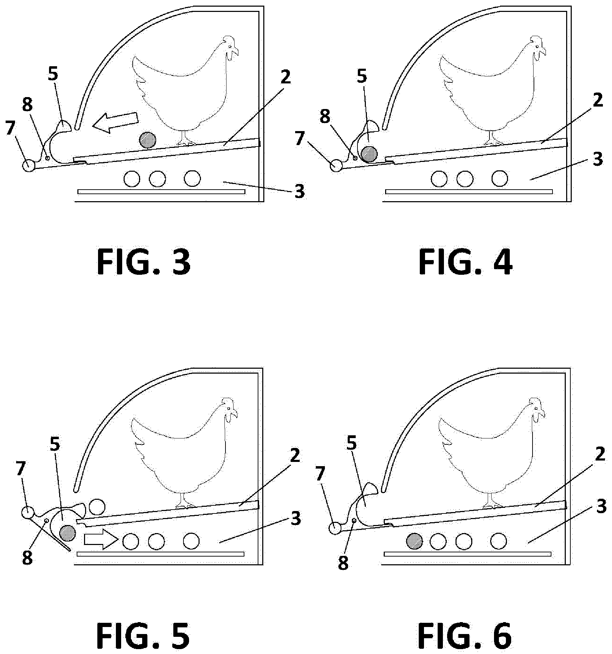

Figure 3 shows the device described herein in a resting position, wherein the scoop (1) is in its first position, such that the housing (5) thereof is located in a position that coincides with the lower end of the inclined floor (2), with the counterweight (7) located on a plane below said empty housing (5). Thus, when a hen is placed inside the nesting box and lays an egg on the inclined floor (2), the same slides down along said inclined floor (2), due to gravity, towards the lower end thereof until it is deposited inside the housing (5), as seen in Figure 4.

The weight of the egg deposited in the housing (5), which is greater than the weight with which the counterweight (7) is tared, causes the body (4) of the scoop to oscillate with respect to the shaft (8) thereof, such that the housing (5) with the egg therein is located on a plane below that of the counterweight (7), the channel (3), as shown in Figure 5, whereby the egg is deposited inside said channel (3) for subsequent removal from the aviary. The geometry of the protrusion (6) causes that when the same is located in a position coinciding with the lower end of the inclined plane (2), it prevents more eggs from falling into the housing (5).

As can be seen in Figure 6, once the egg leaves the housing (5), the body (4) of the scoop (1) oscillates again with respect to the shaft (8) thereof through the action of the counterweight (7) to return to its first position. Thus, this counterweight (7) is once again arranged on a plane below said housing (5), which is prepared to receive a new egg sliding down the inclined floor (2) and then transfer it below to the channel (3) and remove it from the aviary.

## Claims

1. A device for collecting eggs in aviaries, wherein said aviaries comprise a nesting box provided with an inclined floor (2) onto which hens deposit their eggs, said device comprising:
- a scoop (1) located at the lower end of the inclined floor (2), wherein said scoop (1) in turn comprises an oscillating body (4) wherein the following are defined:
- a housing (5) defined at one end of the body (4) intended for housing the eggs which roll down the inclined floor (2), and
- a protrusion (6) defined at a location above the housing (5), and
- a counterweight (7), located at one end of the body (4), opposite the housing (5),
- a channel (3) that runs below the inclined floor (2) to release the eggs towards the outside of the aviary, wherein said channel (3) is limited at the top by the inclined floor (2) and at the bottom by a plane (9), and
- a fixed shaft (8), transverse to the body (4) of the scoop (1), around which said scoop (1) oscillates between a first position, wherein the housing (5) faces the lower end of the inclined floor (2) for collecting the egg, and a second position, wherein the housing (5) faces the channel (3) for releasing said egg,
and wherein the protrusion (6) has a geometry that when the same is located on a position coinciding with the lower end of the inclined plane (2), it prevents more eggs from falling into the housing (5), and wherein the counterweight is defined in the scoop in such a way that when the scoop (1) is in the first position the counterweight (7) is located on a plane below the housing (5).

## Patentansprüche

1. Vorrichtung zum Sammeln von Eiern in Volieren, wobei die Volieren einen Nistkasten umfassen, der mit einem geneigten Boden (2) bereitgestellt ist, auf den die Hühner ihre Eier legen, wobei die Vorrichtung umfasst:
- eine Schaufel (1) am unteren Ende des geneigten Bodens (2), wobei die Schaufel (1) wiederum einen Schwingkörper (4) umfasst, worin Folgendes definiert ist:
- ein Gehäuse (5), das an einem Ende des Körpers (4) definiert ist mit dem Zweck, die Eier unterzubringen, die den geneigten Boden (2) hinunterrollen, und
- einen Vorsprung (6), der an einem Ort oberhalb des Gehäuses (5) definiert ist, und
- ein Gegengewicht (7), das an einem Ende des Körpers (4) angeordnet ist, gegenüber dem Gehäuse (5),
- einen Kanal (3), der unterhalb des geneigten Bodens (2) verläuft, um die Eier in Richtung der Außenseite der Voliere freizugeben, wobei der Kanal (3) an der Oberseite durch den geneigten Boden (2) und an der Unterseite durch eine Ebene (9) begrenzt wird, und
- eine feststehende Welle (8), quer zum Körper (4) der Schaufel (1), um den die Schaufel (1) zwischen einer ersten Position schwingt, wobei das Gehäuse (5) dem unteren Ende des geneigten Bodens (2) zum Sammeln des Eis zugewandt ist, und einer zweiten Position, wobei das Gehäuse (5) dem Kanal (3) zum Freigeben des Eis zugewandt ist,
und wobei der Vorsprung (6) eine Geometrie aufweist, die, wenn diese an einer Position angeordnet ist, die mit dem unteren Ende der geneigten Ebene (2) zusammenläuft, verhindert, dass mehr Eier in das Gehäuse (5) fallen und wobei das Gegengewicht in der Schaufel derart definiert ist, dass, wenn die Schaufel (1) in der ersten Position ist, das Gegengewicht (7) auf einer Ebene unterhalb des Gehäuses (5) angeordnet ist.

## Revendications

1. Dispositif de collecte d'œufs dans les volières, dans lequel lesdites volières comprennent un nichoir pourvu d'un sol incliné (2) sur lequel les poules déposent leurs œufs, ledit dispositif comprenant :
- un godet (1) situé à l'extrémité inférieure du sol incliné (2), dans lequel ledit godet (1) comprend à son tour un corps oscillant (4) dans lequel les éléments suivants sont définis :
- un logement (5) défini à une extrémité du corps (4) destiné à loger les œufs qui roulent sur le sol incliné (2), et
- une saillie (6) définie à un emplacement au-dessus du logement (5), et
- un contrepoids (7), situé à une extrémité du corps (4), en regard du logement (5),
- un canal (3) qui passe sous le sol incliné (2) pour libérer les œufs vers l'extérieur de la volière, dans lequel ledit canal (3) est limité en haut par le sol incliné (2) et en bas par un plan (9), et
- un arbre fixe (8), transversal au corps (4) du godet (1), autour duquel ledit godet (1) oscille entre une première position, dans laquelle le logement (5) fait face à l'extrémité inférieure du sol incliné (2) pour la collecte de l'œuf, et une deuxième position, dans laquelle le logement (5) fait face au canal (3) pour la libération dudit œuf,
et dans lequel la saillie (6) a une géométrie qui, lorsque celle-ci est située dans une position coïncidant avec l'extrémité inférieure du plan incliné (2), empêche plus d'œufs de tomber dans le logement (5), et dans lequel le contrepoids est défini dans le godet de telle manière que lorsque le godet (1) est dans la première position, le contrepoids (7) est situé sur un plan sous le logement (5).
